# FASCICULE DE BREVET EUROPEEN

(11) **EP 1 352 192 B1**
(45) Date de publication et mention de la délivrance du brevet: **20.07.2005**
(21) Numéro de dépôt: 01271512.4
(22) Date de dépôt: 11.12.2001
(51) Int. Cl.: F16L 33/02, B65D 63/02

(54) **COLLIER DE SERRAGE**
KLEMMRING
CLAMPING COLLAR

(30) Priorité: 19.12.2000 FR 0016614; 28.11.2001 FR 0115358
(43) Date de publication de la demande: 15.10.2003
(73) Titulaire: Etablissements CAILLAU, 92130 Issy-les-Moulineaux (FR)
(72) Inventeur: SIDAINE, Benoît, F-41200 PRUNIER (FR); FOUQUERAY, Cyriaque, F-41200 ROMORANTIN LANTHENAY (FR); GOULET, Patrick, F-41130 GIEVRES (FR)
(74) Mandataire: Intès, Didier Gérard André
(86) Numéro de dépôt international: PCT/FR2001/003916
(87) Numéro de publication internationale: WO 2002/050468

(56) Documents cités:
- EP-A- 0 636 826
- US-A- 4 924 558
- US-A- 5 530 996

## Description

La présente invention concerne un collier de serrage comprenant des moyens formant une bande de métal enroulée sur elle-même et présentant une première et une deuxième extrémité respectivement munies d'un crochet et d'une oreille formés en saillie vers l'extérieur du collier, ce dernier étant susceptible d'adopter un état serré dans lequel le crochet est agrafé sur l'oreille et un état non serré dans lequel le crochet et l'oreille sont espacés, le collier comprenant, en outre, une bavette qui est solidaire de la première extrémité du collier et qui, dans ledit état non serré, s'étend sensiblement selon la périphérie du collier, entre le crochet et l'oreille, le collier comprenant encore des moyens de pré-accrochage aptes, dans l'état non serré du collier, à retenir ladite bavette par rapport à la deuxième extrémité dudit collier de manière à fermer ce dernier.

Un collier de ce type est par exemple connu par la demande FR-A-2 729 733. Par exemple, l'oreille et la bavette sont formées aux deux extrémités libres d'une première portion de bande, dite portion intérieure, tandis que le crochet est formé à l'extrémité libre d'une deuxième portion de bande, dite portion extérieure, fixée sur la portion intérieure dans la région de la bavette.

Pour simplifier la description, on considérera de manière générale que de telles portions de bande définies à titre d'exemple en référence à la demande de brevet FR-A-2 729 733, constituent des moyens formant une bande de métal enroulée sur elle-même. Par convention, on considérera que le crochet et l'oreille sont respectivement formés à la première et à la deuxième extrémité de tels moyens formant une bande de métal.

Dans la demande de brevet FR-A-2 729 733, les moyens de pré-accrochage comprennent une fente longitudinale qui est située en-deçà de l'oreille et un ergot tel qu'un pli radial qui est formé en saillie sur la bavette et qui pénètre dans cette fente.

La bavette doit avoir une longueur suffisante pour s'étendre, en passant sous l'oreille, jusque dans une zone située derrière l'oreille dans le sens allant vers la première extrémité du collier, dans laquelle est pratiquée la fente longitudinale précitée. Il en résulte une consommation de matière relativement importante par rapport à la longueur de serrage utile du collier. Pour réduire cette longueur, il est préférable de situer la fente longitudinale juste derrière l'oreille dans le sens allant vers la première extrémité du collier. Cette fenêtre se trouve donc dans une zone qui, lors du serrage du collier, est fortement sollicitée. Du fait de la présence de la fente, la résistance mécanique de la bande dans cette zone est localement réduite, ce qui est désavantageux compte tenu du fait qu'elle est soumise à des contraintes élevées lors du serrage.

Quoi qu'il en soit, comme indiqué précédemment, la bavette est relativement longue, ce qui induit une consommation de matière importante pour réaliser le collier. De plus, ceci constitue une gêne pour les colliers de petit diamètre, pour lesquels la longueur de la bavette représente parfois une portion non négligeable de la périphérie de l'objet à serrer, par exemple de l'ordre de 1/3 de cette périphérie. Lors du serrage, il est difficile de contraindre la bavette à se déplacer par rapport à cet objet sur une telle longueur en adoptant la courbure appropriée.

L'invention vise à améliorer l'art antérieur précité et à remédier au moins en partie à ces inconvénients.

Ce but est atteint grâce au fait que l'oreille présente un bord libre qui, à l'état non serré du collier, est tourné vers le crochet et au fait que la bavette porte au moins un organe de retenue qui, à l'état non serré du collier, se trouve dans une cavité ménagée sous l'oreille et coopère avec le bord libre de cette dernière.

Grâce à ces dispositions, l'organe de retenue que porte la bavette coopère, non pas avec une quelconque fenêtre pratiquée dans la bande formée par le collier, mais, directement, avec le bord libre de l'oreille. Ceci permet d'éviter qu'une fente de dimension importante soit située dans la portion de bande immédiatement adjacente à l'oreille et derrière cette dernière, qui est fortement sollicitée lors du serrage. Par ailleurs, pour permettre le pré-accrochage, la longueur de la bavette doit être suffisante pour que l'organe de retenue de cette dernière, qui est avantageusement réalisé au voisinage immédiat de son extrémité libre, atteigne le bord libre de l'oreille. Il n'est plus nécessaire que la bavette s'étende jusque derrière l'oreille.

Avantageusement, l'oreille présente la forme d'une ondulation dont la concavité est tournée vers l'intérieur du collier pour former ladite cavité.

L'oreille est ainsi conformée de manière simple, non pas, comme dans FR-A-2 729 733, par deux plis accolés, mais par deux plis qui, considérés ensemble, forment une ondulation sous laquelle est ménagé un dégagement qui constitue la cavité précitée. Cette ondulation est conformée de telle sorte (notamment par les rayons de courbure qu'elle présente) qu'elle correspond à un écrouissage suffisant pour conférer à l'oreille la rigidité requise pour le serrage du collier.

Avantageusement, l'organe de retenue est en saillie sur la bavette vers l'extérieur du collier.

Selon un mode de réalisation avantageux, la bavette porte au moins un organe de retenue formé par une patte découpée dans ladite bavette et redressée par rapport à cette dernière de manière à présenter une extrémité libre tournée vers le crochet.

Cette patte de retenue est formée par une simple opération de découpe et de pliage partiel, ce qui est compatible avec des cadences de production élevées.

Dans ce cas, avantageusement, le bord libre de l'oreille présente un retour apte à s'engager au moins partiellement sous ladite patte.

Le bord libre de l'oreille peut être légèrement replié vers l'intérieur de manière à présenter une inclinaison évitant le désengagement de l'organe de retenue par rapport à lui. On peut toutefois choisir de réaliser les retours sous la forme d'un repli local. Par exemple, le bord libre présente une ou plusieurs extensions ou pattes de retour qui sont repliées vers l'intérieur de manière à former le ou les retours.

L'invention concerne également un collier de serrage comprenant des moyens formant une bande de métal enroulée sur elle-même et présentant une première et une deuxième extrémité, respectivement munies d'un crochet et d'une oreille formés en saillie vers l'extérieur du collier, ce dernier étant susceptible d'adopter un état serré dans lequel le crochet est agrafé sur l'oreille et un état non serré dans lequel le crochet et l'oreille sont espacés, le collier présentant, en outre, une bavette qui est solidaire de la première extrémité du collier et qui, dans ledit état non serré, s'étend sensiblement selon la périphérie du collier, entre le crochet et l'oreille.

Dans la demande de brevet FR-A-2 729 733 précitée, le crochet est solidaire d'une portion de bande extérieure qui est fixée sur la portion de bande intérieure, cette dernière portant l'oreille et la bavette à chacune de ses deux extrémités libres. Pour le serrage du collier, on réduit le diamètre de ce dernier en faisant glisser la bavette sous l'oreille, et on rapproche le crochet de cette oreille jusqu'à ce qu'il s'agrafe sur elle. Dans ce mouvement de serrage, le crochet a tendance à se déplacer par rapport à la bavette dans la mesure où, comme le montre FR-A-2 729 733, une ondulation formant réserve d'élasticité est disposée, sur la portion de bande extérieure, entre le crochet et son point de fixation à la portion de bande intérieure. Cette ondulation peut s'ouvrir élastiquement pour permettre un déplacement du crochet par rapport à la bavette.

FR-A-2 729 733 propose des moyens de butée, appartenant respectivement à la portion de bande extérieure et à la zone de la portion de bande intérieure qui porte la bavette, pour limiter l'ouverture de cette réserve d'élasticité qui permet le déplacement du crochet sur la bavette lors du serrage du collier. Il convient en effet d'éviter que cette réserve ne soit trop sollicitée lors du serrage du collier auquel cas sa limite d'élasticité serait dépassée.

Ces dispositions s'avèrent extrêmement efficaces, mais il est apparu que, dans certains cas où l'effort de serrage requis pour l'accrochage du crochet sur l'oreille est particulièrement élevé, les sollicitations exercées à cette occasion sur le crochet tendent à déformer ce dernier de manière non élastique.

En particulier, le crochet est formé à partir d'un pliage de la bande vers l'extérieur et, pour que l'accrochage et le serrage soient fiables, il convient d'éviter de déformer ce pliage de manière irréversible lors des opérations de serrage et d'accrochage. Ainsi, avec le collier que divulgue FR-A-2 729 733, il subsiste un risque que l'accrochage ne soit pas entièrement fiable, à cause d'une déformation du crochet ou d'un déplacement non souhaité de ce dernier par rapport à la bavette.

Par ailleurs, la face supérieure de l'oreille tournée vers le crochet constitue, lors de l'accrochage, une rampe sur laquelle le crochet se déplace. Il convient de parfaitement guider le crochet par rapport à l'oreille lors de ce mouvement et, dans FR-A-2 729 733, ladite face supérieure de l'oreille présente un bossage ou une nervure, tandis que le bord libre du crochet présente une encoche coopérant avec cette nervure pour éviter le déplacement latéral du crochet par rapport à l'oreille. Des dispositions similaires sont bien visibles dans le document EP-A-0 636 826.

Avec le collier de FR-A-2 729 733, on s'est aperçu que, dans certaines situations extrêmes, de telles dispositions pourraient s'avérer insuffisantes. En effet, le crochet et l'oreille sont initialement espacés l'un de l'autre. Lors du serrage du collier, une première phase de réduction du diamètre est nécessaire pour approcher le crochet et l'oreille jusqu'à ce qu'ils entrent en contact. Ensuite, la deuxième phase de réduction du diamètre consiste à faire glisser le crochet sur l'oreille jusqu'à ce qu'il vienne s'agrafer derrière elle. Le bossage ou la nervure pratiqués sur l'oreille et l'encoche pratiquée dans le bord libre du crochet servent seulement à assurer un guidage relatif de ces deux éléments lors de cette deuxième phase de réduction du diamètre. Pendant la première phase de réduction du diamètre, la bavette glisse sous la portion d'extrémité de bande qui porte l'oreille, sans être guidée par rapport à elle. Si, dans cette première phase, l'oreille se déplace légèrement transversalement par rapport à la bavette, l'oreille risque d'entrer en contact avec le crochet dans une mauvaise position, ce qui risque de rendre l'accrochage difficile, voire peu fiable.

L'invention vise à améliorer le collier divulgué par FR-A-2 729 733 pour rendre l'accrochage encore plus fiable.

Ce but est atteint grâce au fait que l'oreille présente un bord libre qui, à l'état non serré du collier, est tourné vers le crochet et qui présente une échancrure, au fait que la bavette porte un relief de guidage, qui est en saillie sur sa face externe et qui est aligné avec ladite échancrure dans la direction de serrage du collier et au fait que le collier présente des moyens pour loger ledit relief de guidage à l'état serré du collier sous l'ensemble formé par l'oreille et le crochet agrafé sur cette dernière.

Ce relief de guidage sert à guider l'oreille sur la bavette et/ou à former une butée pour le crochet.

Le relief de guidage est apte à remplir une fonction de guidage car, lors de la première phase de réduction du diamètre correspondant à l'approche de l'oreille et du crochet, il permet de guider l'oreille (par son échancrure) par rapport à la bavette de sorte que l'oreille se présente dans la position souhaitée pour le contact avec le crochet. Ensuite, dans la deuxième phase de réduction du diamètre, le crochet peut être guidé sur l'oreille par une conformation adéquate du bord libre dudit crochet et de la face supérieure de l'oreille.

De plus, un éventuel déplacement du crochet sur la bavette lors de l'accrochage est limité par une coopération en butée entre la base du crochet et le relief de guidage.

Ce dernier constitue donc une aide à la phase d'approche du crochet de l'oreille avant l'accrochage et une sécurité évitant la déformation non souhaitée du crochet lors de l'accrochage. Une fois l'accrochage réalisé, le relief de guidage ne constitue aucune gêne, puisqu'il est logé sous l'ensemble formé par le crochet et l'oreille.

Avantageusement, le collier comporte des surfaces de calage aptes à coopérer avec le relief de guidage à l'état serré du collier pour s'opposer aux déplacements relatifs entre l'oreille et la bavette transversalement à la direction de serrage du collier.

Avec ces dispositions, le relief de guidage est également mis à profit à l'état serré du collier. Il sécurise en effet le maintien du collier en position serrée, en empêchant que l'oreille ne se déplace par rapport à la bavette une fois le crochet accroché sur elle.

Avantageusement, lesdites surfaces de calage comprennent le bord de l'échancrure de l'oreille.

Avantageusement, le relief de guidage est formé par un bossage.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1 montre un collier conforme à l'invention dans son état non serré de pré-accrochage, ce collier étant représenté en coupe dans un plan perpendiculaire à son axe ;
- la figure 2 est une vue analogue à celle de la figure 1, qui montre le collier à l'état serré ;
- la figure 3 est une vue en perspective partielle du collier, sans le crochet, prise suivant la direction III de la figure 1 ;
- la figure 4 est une vue prise dans la même direction, mais représentée en plan ;
- la figure 5 est une vue en plan prise suivant la flèche V de la figure 1 ;
- la figure 6 est une vue partielle en perspective, montrant la bavette et le crochet, prise selon la flèche VI de la figure 1 ;
- la figure 7 est une vue de dessus de la bavette du collier, selon une variante ; et
- la figure 8 est une coupe selon la ligne VIII-VIII de la figure 7.

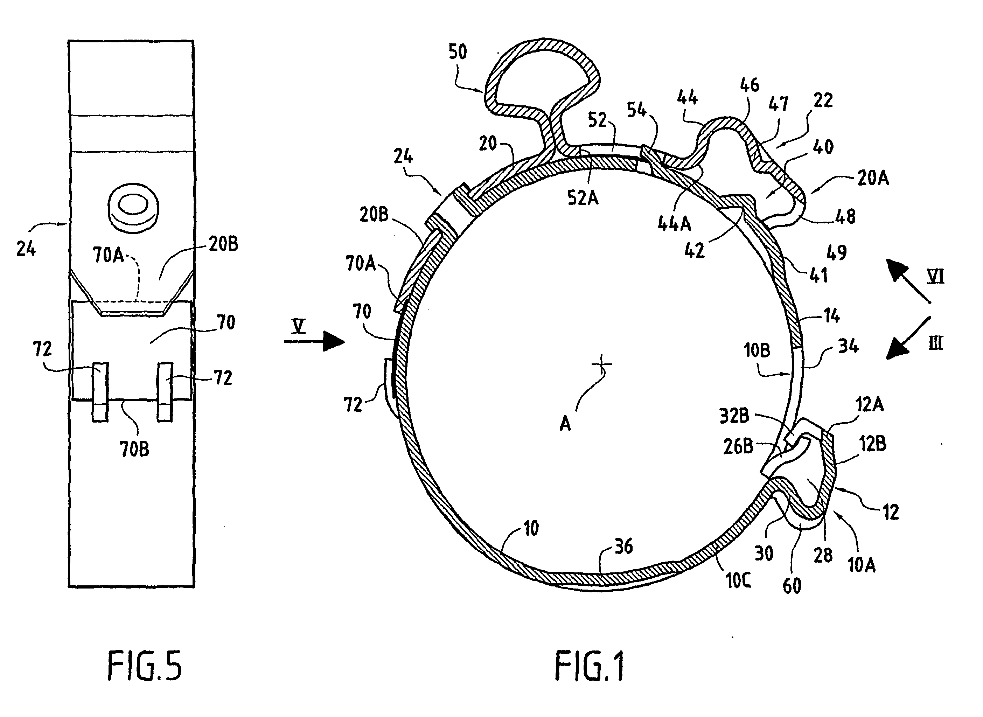

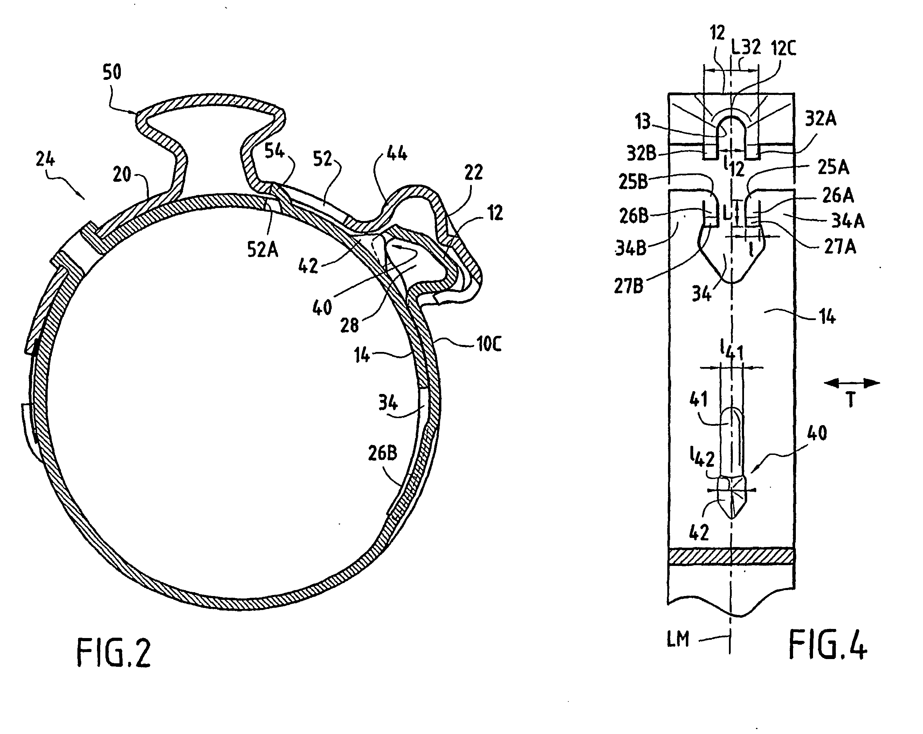

Comme on le voit sur les figures 1 et 2, le collier comprend une portion de bande intérieure 10, qui est enroulée sur elle-même et dont la première extrémité 10A porte une oreille 12, tandis que la deuxième extrémité 10B porte une bavette 14. Le collier comprend également une portion de bande extérieure 20 qui, à son extrémité libre 20A, porte un crochet 22 et qui, au voisinage de son extrémité 20B opposée à ce crochet, est fixée à la portion de bande intérieure 10, par exemple par rivetage 24.

Dans toute la suite, on qualifiera d'intérieurs les éléments plus proches de l'axe géométrique A du collier, par opposition aux éléments extérieurs qui en sont plus éloignés.

Considérées ensemble, ces portions de bande intérieure et extérieure constituent des "moyens formant une bande de métal enroulée sur elle-même". Dans toute la suite, on considérera que les extrémités 20A et 10A précitées constituent respectivement la première et la deuxième extrémité de ces moyens formant une bande de métal.

Sur la figure 1, le collier est représenté à l'état non serré, le crochet 22 et l'oreille 12 étant distants l'un de l'autre. Dans cet état, il est toutefois fermé, c'est-à-dire que sa périphérie interne forme un cercle fermé. En effet, la portion de bande intérieure 12 est enroulée sur elle-même sur plus d'un tour. Pour cela, la bavette est retenue par rapport à la deuxième extrémité 10A du collier par des moyens de pré-accrochage.

La bavette 14 est définie comme étant une portion d'extrémité de bande qui s'étend sous le crochet 22 et au-delà de ce dernier vers l'oreille 12. Classiquement, la présence d'une bavette permet d'éviter une discontinuité de l'appui de la bande sur l'objet à serrer, même dans l'espace formé sous le crochet.

En l'espèce, la bavette 14 est constituée par la partie d'extrémité de la portion de bande intérieure 10 qui s'étend à partir du crochet 22, vers l'extrémité libre. Elle est solidaire de la première extrémité 20A du collier par la fixation de la portion de bande extérieure 20 sur la portion intérieure.

Le bord libre 12A de l'oreille 12 est tourné vers le crochet 22. Il forme l'extrémité libre 10A de la portion de bande intérieure 10. De son côté, la bavette présente, à son extrémité libre, deux pattes de retenue 26A et 26B qui, à l'état non serré, sont engagées sous l'oreille et coopèrent avec le bord libre 12A de cette dernière.

Une cavité 28 est en effet ménagée sous l'oreille 12 qui présente globalement la forme d'une ondulation dont la concavité est tournée vers l'intérieur du collier. Plus précisément, considérée à partir d'une région courante de la portion de bande 10, l'oreille présente un premier pli formant une jambe 30 qui fait sensiblement radialement saillie sur le collier en étant légèrement inclinée vers l'arrière (à l'opposé du bord libre 12A de l'oreille) de manière à former une surface d'accrochage pour le bord libre du crochet 22. A partir de cette jambe 30, la face supérieure 12B de l'oreille s'étend vers son bord libre 12A en formant un pont dont au moins une partie d'extrémité est légèrement inclinée vers l'intérieur du collier dans le sens allant vers le bord libre 12A de manière à former une rampe qui, lors de l'accrochage, coopère avec le bord libre du crochet pour favoriser l'agrafage de ce dernier derrière l'oreille, sur la jambe 30.

Le bord libre 12A en lui-même présente un retour formant une portion de pré-accrochage qui est inclinée vers la jambe 30 du côté intérieur de l'oreille, de manière à s'engager au moins partiellement sous la ou les pattes de retenue pour réaliser un pré-accrochage fiable. Comme on le voit sur la figure 4, dans la mesure où deux pattes de retenue 26A et 26B sont prévues, le bord libre 12A présente deux pattes de retour, respectivement 32A et 32B, coopérant respectivement avec ces deux pattes de retenue.

Ces demières sont reliées à la bavette 14 à l'extrémité libre de celle-ci et sont légèrement redressées de telle sorte que leurs extrémités libres respectives, 27A et 27B, sont tournées vers le crochet 22.

Pour la clarté du dessin, on a représenté sur la figure 4 une position dans laquelle l'oreille 12 ne coopère pas avec les pattes 26A et 26B. A partir de cet état ouvert du collier, on obtient son état de pré-accrochage en faisant glisser l'oreille 12 sur la bavette (les pattes 26A et 26B constituant alors des rampes pour le bord libre de l'oreille) jusqu'à ce que les pattes de retour 32A et 32B viennent naturellement s'engager sous les pattes de retenue 26A et 26B.

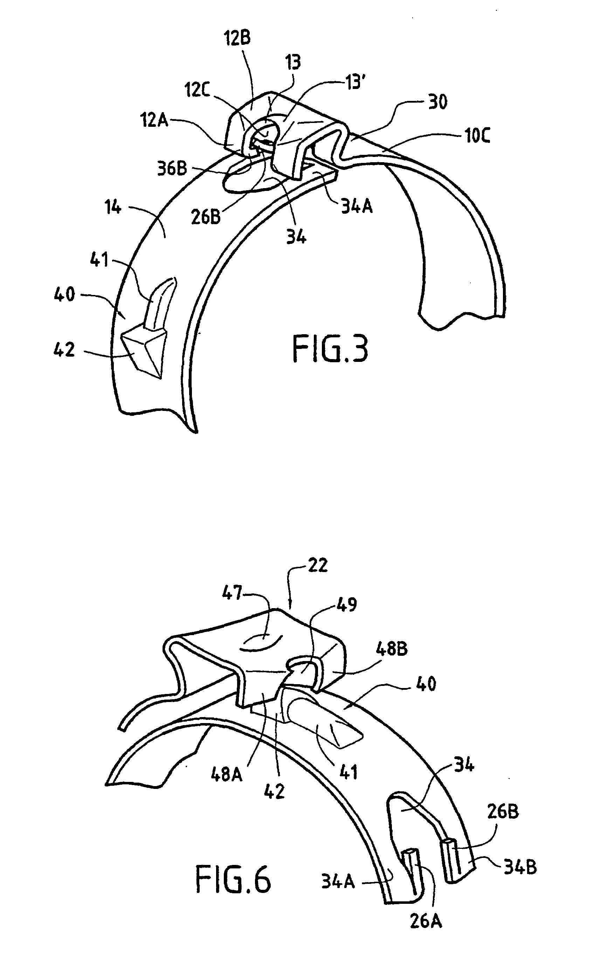

Comme on le voit mieux sur les figures 4 et 6, la bavette présente une extrémité libre conformée en fourche. En effet, une découpe centrale 34 a été réalisée à l'extrémité libre de la bavette, découpe de part et d'autre de laquelle subsistent les deux dents 34A et 34B de la fourche. Ces deux dents 34A et 34B portent chacune une patte de retenue, respectivement 26A et 26B, sur leurs bords internes en regard.

Les pattes de retour 32A, 32B, en s'engageant sous les pattes de retenue 26A, 26B, pénètrent dans la découpe 34 et sont ainsi calées transversalement contre les bords longitudinaux de cette dernière. Ainsi, l'oreille 12 est calée transversalement par rapport à la bavette.

De son côté, l'oreille 12 présente, sur son bord libre 12A, une échancrure 12C, dont la fonction sera précisée ci-après. Les pattes de retour 32A et 32B sont formées sur les deux bords en regard de cette échancrure.

Le collier sert, par exemple, au serrage d'un tuyau plus ou moins souple, par exemple en caoutchouc ou en polyéthylène, sur un tube rigide. Ce tuyau sert classiquement à véhiculer du fluide et il convient d'assurer l'étanchéité de la liaison entre le tuyau et le tube. Dans cette optique, il convient d'éviter autant que possible les discontinuités d'appui de la surface interne du collier sur le tuyau.

Pour cette raison, de manière connue en soi, la portion de bande intérieure 10 présente un bossage longitudinal 36 en légère saillie sur sa périphérie interne. Ce bossage est disposé de telle sorte que, lorsque le collier est serré, la découpe 34 formée à l'extrémité libre de la bavette s'insère dans ledit bossage, de part et d'autre duquel se trouvent les dents de la fourche 34A et 34B. A son extrémité éloignée de l'oreille 12, ce bossage est raccordé de manière progressive au cercle formé par la périphérie interne du collier. Ainsi, il sert à "masquer" l'épaisseur de l'extrémité libre de la bavette 14 pour éviter que cette dernière ne soit l'occasion d'une discontinuité d'appui.

Dans le même ordre d'idée, il convient d'éviter que l'organe de retenue, qui est par exemple formé par les pattes de retenue 26A et 26B, ne maintienne la bavette 14 à distance de la périphérie interne de la bande 10, à l'état serré du collier, pour que la continuité de l'appui du collier sur l'objet à serrer soit assurée.

Selon une première variante, l'organe de retenue est susceptible d'être ramené sensiblement dans le plan de la bavette sous l'effet de la pression exercée sur ledit organe par la portion de bande 10C située en arrière de l'oreille, lors du serrage du collier. L'organe de retenue est ramené dans le plan de la bavette, c'est-à-dire qu'il cesse d'être en saillie sur la face externe de cette dernière et s'inscrit dans le cercle circonscrit à ladite face externe comme on le voit sur la figure 2.

Cette première variante est celle de l'exemple représenté, dans lequel les pattes de retenue 26A et 26B ont des dimensions qui leur confèrent la relative flexibilité nécessaire. Par exemple, la largeur I de ces pattes, mesurée transversalement par rapport à la bande dans laquelle est formée la bavette, est tout au plus égale au tiers de leur longueur L.

Par ailleurs, dans les zones 25A et 25B de raccordement des pattes à la bande, l'écrouissage est suffisamment faible pour que ces pattes soient fléchies à l'intérieur lors du serrage. Par exemple, on choisit que les pattes puissent être fléchies lorsque s'exerce sur elles une pression de l'ordre de 35 N/m², correspondant à un effort de serrage de 150 N.

Selon une deuxième variante non représentée, on pourra prévoir que la portion de bande 10C située en arrière de l'oreille 12 comporte des moyens pour loger l'épaisseur saillante de l'organe de retenue telle que les pattes 26A et 26B. Ces moyens de logement pourraient être constitués par une découpe longitudinale qui, toutefois, aurait l'inconvénient de diminuer localement la résistance mécanique de la portion de bande 10C. Ils pourraient également être constitués par le creux formé sous un bossage en saillie sur la face externe de la portion de bande 10C.

Comme on le voit sur la figure 1, grâce à l'invention, le pré-accrochage est possible dès lors que la bavette 14 s'étend suffisamment sous l'oreille 12 pour que les pattes de retenue puissent être retenues à l'état pré-accroché par le bord libre de cette oreille. Il suffit, par exemple, que l'extrémité libre de la bavette s'étende sensiblement jusqu'à la base du pli formant la jambe 30 de l'oreille. La longueur de la bavette est donc considérablement réduite par rapport à l'art antérieur, dans lequel un organe de retenue formé à l'extrémité libre de la bavette devait être inséré dans une fenêtre pratiquée dans la portion 10C de la bande pour permettre le pré-accrochage. Outre l'économie substantielle de matière que cette diminution de longueur représente, ceci permet d'équiper même des colliers de petit diamètre, par exemple compris entre 16,5 et 30 mm, avec des moyens de pré-accrochage coopérant avec leur bavette.

La bavette 14 présente un relief de guidage 40 qui est en saillie sur sa face externe et qui, comme on le voit mieux sur la figure 4, est aligné avec l'échancrure 12C du bord libre de l'oreille 12 dans la direction de serrage du collier.

En l'espèce, l'oreille 12 et la bavette 14 sont formées aux deux extrémités de la même portion 10 de bande, et l'échancrure 12C et le relief 40 que porte la bavette sont alignés dans la direction longitudinale de cette portion de bande, par exemple sur sa ligne longitudinale médiane LM.

Le relief 40 est constitué par un bossage formé en relief sur la face externe de la bavette. On pourra choisir d'autres reliefs, par exemple une patte ou un crevé légèrement relevé par rapport à la bande. Toutefois, un bossage présente l'avantage de ne pas affecter la résistance mécanique de la bande et de former des surfaces de guidage en pente douce.

A l'état serré du collier visible sur la figure 2, le bossage 40 est logé sous l'ensemble formé par l'oreille et le crochet agrafé sur cette dernière. Lors de l'accrochage, l'oreille 12 est engagée sous le crochet 22 qui est agrafé sur elle. Le bossage 40 est alors engagé dans la cavité 28 ménagée sous l'ondulation que forme l'oreille 12. Toutefois, comme on le voit sur la figure 2, une portion 42 du bossage 40 dépasse au-delà de l'échancrure 12C du bord libre de l'oreille et coopère avec le crochet.

Considéré dans le sens allant vers son bord libre, le crochet comprend un premier pli redressé par rapport à la portion de bande 20 pour former une jambe 44 qui est sensiblement radiale. A partir de l'extrémité de cette jambe, le crochet forme un pont 46 sensiblement parallèle à la périphérie du collier. L'extrémité de ce pont opposée à la jambe 44 est repliée vers l'intérieur pour former une deuxième jambe 48 qui constitue le bord d'accrochage du crochet sur l'oreille. L'inclinaison de cette deuxième jambe est telle que, en position accrochée, elle est sensiblement parallèle à la jambe 30 d'accrochage de l'oreille.

Lors du serrage et de l'accrochage du collier, le crochet se déplace sur la bavette 14 dans le sens allant en se rapprochant de l'extrémité libre de cette dernière. Pour limiter ce déplacement, la partie 42 du bossage 40 qui dépasse au-delà de l'échancrure 12C du bord libre de l'oreille coopère avec la base 44A du crochet, cette base étant située, sur la face interne de la portion de bande 20, dans une zone de la jambe 44 adjacente à la bavette.

La portion de bande extérieure 20 comporte une ondulation 50 qui, comme on le voit en comparant les figures 1 et 2, a tendance à s'ouvrir lors du serrage du collier. Les moyens de butée connus par FR-A-2 729 733 sont prévus pour limiter l'ouverture de cette ondulation et s'assurer qu'elle ne dépasse pas sa limite d'élasticité. Ces moyens de butée comprennent une fenêtre 52 réalisée dans la portion de bande 20, entre l'ondulation 50 et le crochet 22, ainsi qu'un ergot 54, qui est réalisé dans la portion de bande intérieure 10, au voisinage de la bavette, de manière à être engagé dans ladite fenêtre. En situation d'ouverture maximale de l'ondulation 50, cet ergot 54 coopère avec le bord de butée 52A de la fenêtre 52 qui est adjacent à l'ondulation 50.

Le bossage 42 coopère quant à lui avec la base 44A du crochet pour éviter que, une fois que l'ergot 54 est venu en butée avec le bord de la fenêtre 52A, une sollicitation excessive sur le crochet ne tende à le déformer plastiquement en le faisant basculer et en "déroulant" le pli qui rattache la jambe 44 à la portion courante de la bande 20, ce qui aurait pour conséquence de modifier de manière irréversible la géométrie du crochet et pourrait nuire à la qualité de l'accrochage

Lors du serrage du collier, l'oreille 12 se déplace sur la bavette 14 de la manière précédemment indiquée. Le bossage 40 permet de guider efficacement ce déplacement relatif, au moins lorsque l'oreille parvient au voisinage du crochet. En effet, du fait de l'échancrure 12C, le bord libre de l'oreille enjambe à cette occasion le bossage 40, ce qui empêche tout déplacement relatif entre la bavette et l'oreille dans un sens T transversal à la direction longitudinale de la portion de bande 10. Bien entendu, les dimensions de l'échancrure, en hauteur et en largeur, sont au moins sensiblement égales à celles du bossage.

Le bossage 40 présente une première partie 41 qui est progressive. Lors du serrage du collier, l'échancrure 12C enjambe d'abord cette première partie. On voit que la largeur I₄₁ de cette première partie 41 est inférieure à la largeur maximale I₄₂ du bossage 40, elle-même sensiblement égale mais légèrement inférieure à la largeur I₁₂ de l'échancrure 12C. Toutes ces largeurs sont mesurées transversalement à la direction longitudinale de la bande.

Ainsi, même si l'oreille est légèrement décalée transversalement par rapport à la bavette, la première portion 41 permet de la remettre dans l'axe sans s'opposer au serrage. Le bossage 40 présente sa largeur maximale dans sa deuxième portion 42. A l'état accroché, cette partie 42 se trouve dans l'échancrure 12C. Ainsi, le bord 13 de l'échancrure coopère avec la partie 42 du bossage pour caler l'oreille par rapport à la bavette à l'état serré du collier.

La première partie 41 du bossage permet donc de guider l'oreille dans son mouvement d'approche du crochet, lors du serrage du collier. La deuxième partie 42 permet, d'une part, d'éviter les déformations excessives du crochet et, d'autre part, d'assurer le calage de l'oreille par rapport à la bavette à l'état serré du collier.

De manière connue en soi, la face supérieure 12B de l'oreille permet de guider le crochet par rapport à ladite oreille lors de l'agrafage. Pour cela, le bord libre 48 du crochet présente lui-même une échancrure 49 située dans une portion médiane, c'est-à-dire qu'elle est globalement alignée avec l'échancrure 12C de l'oreille. Sur le sommet de l'échancrure 12C, le bord 13 de cette dernière est légèrement relevé de manière à former un bossage 13' sur lequel s'engage l'échancrure 49 du crochet. Les deux dents 48A et 48B du bord libre du crochet qui subsistent de part et d'autre de l'échancrure centrale 49 de ce dernier sont légèrement inclinées vers sa base 44 de manière à se laisser guider par la face supérieure 12B de l'oreille, de part et d'autre du bossage 13'.

Par ailleurs, l'oreille 12 présente, sur sa face arrière de retenue du crochet, c'est-à-dire sur la face externe de sa jambe 30, un bossage de calage 60. A l'état accroché du collier, l'échancrure 49 du bord libre du crochet enjambe ce bossage 60, de sorte que le crochet est parfaitement calé transversalement par rapport à l'oreille.

Le bossage 60 forme sous l'oreille 12 un creux dans lequel, comme on le comprend au vu de la figure 2, le bossage 40 s'engage partiellement à l'état serré du collier. Plus précisément, c'est la première partie 41 de ce bossage qui est légèrement engagée dans ce creux. Ceci favorise encore le calage de l'oreille par rapport à la bavette.

Il faut encore noter que le pont 46 du crochet présente une cuvette de rigidification 47 en saillie sur sa face interne. A l'état accroché du collier, cette cuvette vient se positionner derrière le bossage 13'.

Comme on le voit mieux sur la figure 5, le collier présente une étiquette 70 qui est maintenue sur ce collier en étant coincée sous au moins une patte de maintien 72 formée par découpe et pliage dans les moyens formant bande du collier. En l'espèce, deux pattes 72, découpées dans la portion de bande intérieure 10 et légèrement redressées par rapport à cette dernière pour permettre l'engagement de l'étiquette 70 sous elles, puis ramenées vers le plan de la bande pour coincer l'étiquette, sont prévues. L'étiquette 70 est par exemple formée par une simple bande de couleur en matériau plastique qui constitue, pour l'utilisateur, un repère permettant d'identifier le collier. Par exemple, on choisira une couleur différente pour chaque diamètre de collier.

Dans le cas du collier représenté sur les figures, on met à profit l'existence de la portion de bande extérieure 20 pour le maintien de l'étiquette. En effet, comme on le voit sur la figure 5, l'étiquette est coincée, sur un premier bord 70A, entre les portions de bande intérieure et extérieure (sous l'extrémité libre 20B de la portion extérieure qui se trouve en-deçà de la zone de rivetage 24) et, sur un deuxième bord 70B sous la ou les pattes de maintien 72.

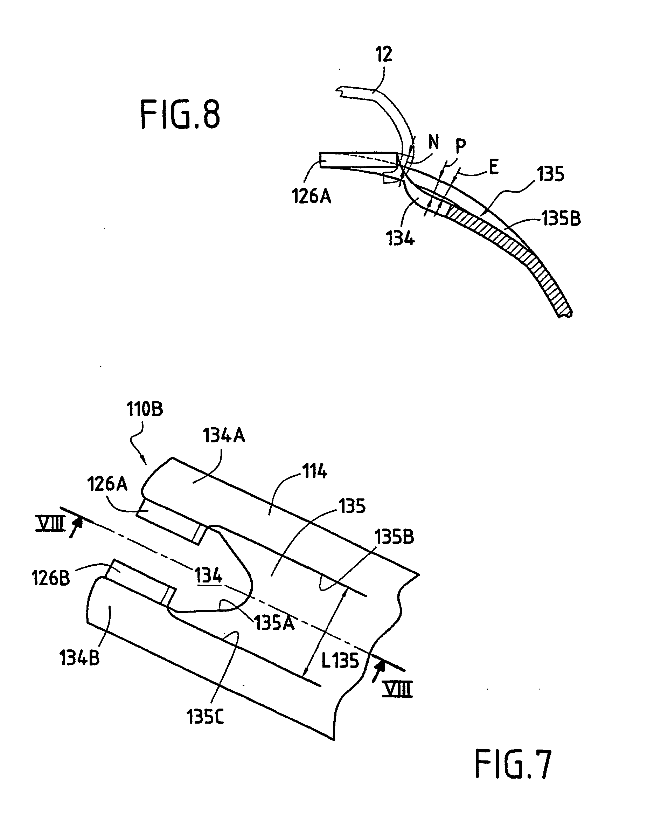

Sur les figures 7 et 8, les éléments communs aux figures précédentes sont désignés par les mêmes références, augmentées de 100.

La figure 7 montre la deuxième extrémité 110B du collier, qui porte la bavette 114. Les deux dents 134A, 134B de la fourche situées de part et d'autre de la découpe 134 portent respectivement les pattes de retenue 126A et 126B.

La bavette 114 présente un soyage 135, en creux par rapport à sa périphérie externe. Ce soyage s'étend dans une portion centrale de la bavette et il a une profondeur qui diminue progressivement à partir de son extrémité 135A qui forme le bord de la découpe 134 en s'éloignant de l'extrémité 110B, jusqu'à avoir une profondeur nulle et rattraper le niveau de la périphérie externe du collier.

La largeur L135 du soyage est au moins sensiblement égale à la distance L32 (voir figure 4) mesurée entre les bords externes (opposés à la ligne médiane LM) des pattes de retour 32A et 32B. Ainsi, à l'état de pré-accrochage du collier, ces pattes sont situées dans l'espace délimité entre les deux bords longitudinaux 135B et 135C du bossage 135.

Lors du serrage du collier, l'oreille se déplace sur la bavette en s'éloignant de l'extrémité 110B. Au cours de ce déplacement, l'oreille est guidée par le maintien des pattes de retour 32A, 32B entre les bords du soyage. De plus, le soyage joue le rôle d'une rampe qui, lors du serrage du collier fait progressivement "monter" l'oreille sur la bavette et évite ainsi la sensation de point dur lors du serrage.

Sur la figure 8, on a indiqué en traits interrompus la position de l'oreille 12 en position de pré-accrochage, les pattes de retour étant retenues sous les pattes de retenue. On remarque que la profondeur maximale P du soyage est comprise entre 1,4 et 2 fois l'épaisseur E de la bande et que le niveau N de dépassement des pattes de retenue 126A, 126B par rapport à la périphérie externe de la bavette est tout au plus sensiblement égal à cette épaisseur E.

## Revendications

1. Collier de serrage comprenant des moyens (10, 20) formant une bande de métal enroulée sur elle-même et présentant une première et une deuxième extrémité (20A, 10A) respectivement munies d'un crochet (22) et d'une oreille (12) formés en saillie vers l'extérieur du collier, ce dernier étant susceptible d'adopter un état serré dans lequel le crochet est agrafé sur l'oreille et un état non serré dans lequel le crochet et l'oreille sont espacés, le collier comprenant, en outre, une bavette (14 ; 114) qui est solidaire de la première extrémité (20A) du collier et qui, dans ledit état non serré, s'étend sensiblement selon la périphérie du collier, entre le crochet (22) et l'oreille (12), le collier comprenant encore des moyens de pré-accrochage aptes, dans l'état non serré du collier, à retenir ladite bavette par rapport à la deuxième extrémité dudit collier de manière à fermer ce dernier,
**caractérisé en ce que** l'oreille présente un bord libre (12A) qui, à l'état non serré du collier, est tourné vers le crochet (22) et **en ce que** la bavette porte au moins un organe de retenue (26A, 26B; 126A, 126B) qui, à l'état non serré du collier, se trouve dans une cavité (28) ménagée sous l'oreille et coopère avec le bord libre (12A) de cette dernière.

2. Collier de serrage selon la revendication 1, **caractérisé en ce que** l'oreille (12) présente la forme d'une ondulation dont la concavité est tournée vers l'intérieur du collier pour former ladite cavité (28).

3. Collier selon la revendication 1 ou 2, **caractérisé en ce que** l'organe de retenue (26A, 26B; 126A, 126B) est en saillie sur la bavette (14 ; 114) vers l'extérieur du collier.

4. Collier selon l'une quelconque des revendications 1 à 3, **caractérisé en ce que** la bavette (14 ; 114) porte au moins un organe de retenue formé par une patte (26A, 26B; 126A, 126B) découpée dans ladite bavette et redressée par rapport à cette dernière de manière à présenter une extrémité libre (27A, 27B) tournée vers le crochet (22).

5. Collier selon la revendication 4, **caractérisé en ce que** le bord libre (12A) de l'oreille (12) présente un retour (32A, 32B) apte à s'engager au moins partiellement sous ladite patte (26A, 26B ; 126A, 126B).

6. Collier selon la revendication 3 et l'une quelconque des revendications 1 à 5, **caractérisé en ce que** l'organe de retenue (26A, 26B ; 126A, 126B) est susceptible d'être ramené sensiblement dans le plan de la bavette (14; 114) sous l'effet de la pression exercée sur ledit organe par la portion de bande (10C) située en arrière de l'oreille (12) lors du serrage du collier.

7. Collier selon la revendication 3 et l'une quelconque des revendications 1 à 5, **caractérisé en ce que** la portion de bande (10C) située en arrière de l'oreille (12) comporte des moyens pour loger l'épaisseur saillante de l'organe de retenue.

8. Collier selon la revendication 4 et l'une quelconque des revendications 1 à 7, **caractérisé en ce que** la bavette (14 ; 114) présente une extrémité libre conformée en fourche formée par deux dents (34A, 34B ; 134A, 134B) qui portent chacune une patte de retenue (26A, 26B ; 126A, 126B) sur leurs bords internes en regard.

9. Collier de serrage comprenant des moyens (10, 20) formant une bande de métal enroulée sur elle-même et présentant une première et une deuxième extrémité (20A, 10A) respectivement munies d'un cmchet (22) et d'une oreille (12) formés en saillie vers l'extérieur du collier, ce dernier étant susceptible d'adopter un état serré dans lequel le crochet est agrafé sur l'oreille et un état non serré dans lequel le crochet et l'oreille sont espacés, le collier présentant, en outre, une bavette (14 ; 114) qui est solidaire de la première extrémité (20A) du collier et qui, dans ledit état non serré, s'étend sensiblement selon la périphérie du collier, entre le crochet (22) et l'oreille (12),
**caractérisé en ce que** l'oreille (12) présente un bord libre (12A) qui, à l'état non serré du collier, est tourné vers le crochet (22) et qui présente une échancrure (12C), **en ce que** la bavette (14 ; 114) porte un relief de guidage (40), qui est en saillie sur sa face externe et qui est aligné avec ladite échancrure (12C) dans la direction de serrage du collier et **en ce que** le collier présente des moyens pour loger ledit relief de guidage (40) à l'état serré du collier sous l'ensemble formé par l'oreille (12) et le crochet (22) agrafé sur cette dernière.

10. Collier selon l'une quelconque des revendications 1 à 8, **caractérisé en ce que** le bord libre (12A) présente une échancrure (12C), **en ce que** la bavette (14;114) porte un relief de guidage (40), qui est en saillie sur sa face externe et qui est aligné avec ladite échancrure (12C) dans la direction de serrage du collier et **en ce que** le collier présente des moyens pour loger ledit relief de guidage (40) à l'état serré du collier sous l'ensemble formé par l'oreille (12) et le crochet (22) agrafé sur cette dernière.

11. Collier selon la revendication 10, **caractérisé en ce que** l'oreille (12) présente la forme d'une ondulation dont la concavité est tournée vers l'intérieur du collier pour former ladite cavité (28).

12. Collier selon l'une quelconque des revendications 10 ou 11, **caractérisé en ce qu'**il présente des surfaces de calage (13) aptes à coopérer avec le relief de guidage (40) à l'état serré du collier pour s'opposer aux déplacements relatifs entre l'oreille (12) et la bavette (14 ; 114) transversalement (T) à la direction de serrage du collier.

13. Collier selon la revendication 12, **caractérisé en ce que** lesdites surfaces de calage comprennent le bord (13) de l'échancrure (12C) de l'oreille (12).

14. Collier selon l'une quelconque des revendications 10 à 13, **caractérisé en ce que** l'oreille (12) présente, sur sa face arrière (30) de retenue du crochet (22) à l'état serré du collier, un bossage de calage (60) qui forme sous ladite oreille un creux dans lequel le relief de guidage (40) est au moins partiellement engagé (41) à l'état serré du collier.

15. Collier selon l'une quelconque des revendications 10 à 14, **caractérisé en ce que** le relief de guidage (40) est apte à coopérer en butée avec une région (44A) du crochet (22) opposée au bord libre (48) de ce dernier pour, lors du serrage, limiter le déplacement du crochet par rapport à la bavette.

16. Collier selon l'une quelconque des revendications 10 à 15, **caractérisé en ce que** le relief de guidage est formé par un bossage (40).

17. Collier selon l'une quelconque des revendications 10 à 16, **caractérisé en ce qu'**il présente une étiquette (70) maintenue sur le collier en étant coincée sous au moins une patte de maintien (72) formée par découpe et pliage dans les moyens formant bande (10, 20).

18. Collier selon la revendication 17, **caractérisé en ce que** les moyens formant bande comprennent une portion de bande intérieure (10) et une portion de bande extérieure (20) fixée (24) sur ladite portion de bande intérieure et **en ce que** l'étiquette (70) est coincée, sur un premier bord (70A), entre lesdites portions intérieure et extérieure et, sur un deuxième bord (70B), sous au moins une patte de maintien (72).

19. Collier de serrage selon l'une quelconque des revendications 10 à 18, **caractérisé en ce que** la bavette (114) présente un soyage (135) dans sa région centrale.

## Patentansprüche

1. Klemmschelle, die Mittel (10, 20) umfaßt, die ein Metallband ausbilden, das auf sich selbst eingerollt ist, und die ein erstes und ein zweites Ende (20A, 10A) aufweist, das jeweils mit einem Haken (22) und einer Öse (12) versehen ist, die zum Äußeren der Schelle hin vorstehend ausgebildet sind, wobei letztere geeignet ist, einen geschlossenen Zustand einzunehmen, in dem der Haken auf der Öse festgehakt ist, und einen nicht geschlossenen Zustand, in dem der Haken und die Öse beabstandet sind, wobei die Schelle ferner einen Randstreifen (14; 114) umfaßt, der mit dem ersten Ende (20A) der Schelle einstückig ist und der sich im nicht geschlossenen Zustand im wesentlichen entlang des Umfangs der Schelle erstreckt, zwischen dem Haken (22) und der Öse (12), wobei die Schelle noch Mittel zum Voreinhaken umfaßt, die im nicht geschlossenen Zustand der Schelle geeignet sind, den Randstreifen in Bezug auf das zweite Ende der Schelle derart zurückzuhalten, daß die Schelle geschlossen wird, **dadurch gekennzeichnet, daß** die Öse einen freien Rand (12A) aufweist, der im nicht geschlossenen Zustand der Schelle zum Haken (22) hin gedreht ist, und **dadurch**, daß der Randstreifen wenigstens ein Rückhalteelement (26A; 126A, 126B) trägt, welches sich im nicht geschlossenen Zustand der Schelle in einem Hohlraum (28) befindet, der unter der Öse ausgebildet ist und mit dem freien Rand (12A) der Öse zusammenwirkt.

2. Klemmschelle nach Anspruch 1, **dadurch gekennzeichnet, daß** die Öse (12) die Form einer Welle aufweist, deren Konkavität zum Inneren der Schelle hin gerichtet ist, um den Hohlraum (28) auszubilden.

3. Schelle nach Anspruch 1 oder 2, **dadurch gekennzeichnet, daß** das Rückhalteelement (26A; 126A, 126B) auf dem Randstreifen (14; 114) zum Äußeren der Schelle hin vorsteht.

4. Schelle nach einem der Ansprüche 1 bis 3, **dadurch gekennzeichnet, daß** der Randstreifen (14; 114) mindestens ein Rückhalteelement trägt, das durch eine Lasche (26A, 26B; 126A, 126B) ausgebildet ist, die in dem Randstreifen ausgeschnitten und in Bezug auf letzteren derart nach oben gerichtet ist, daß sie ein freies Ende (27A, 27B) aufweist, das zum Haken (22) hin gedreht ist.

5. Schelle nach Anspruch 4, **dadurch gekennzeichnet, daß** der freie Rand (12A) der Öse (12) einen Rücksprung (32A, 32B) aufweist, der geeignet ist, wenigstens teilweise unter der Lasche (26A, 26B; 126A, 126B) einzugreifen.

6. Schelle nach Anspruch 3 und nach einem der Ansprüche 1 bis 5, **dadurch gekennzeichnet, daß** das Rückhalteelement (26A, 26B; 126A, 126B) geeignet ist, im wesentlichen auf der Ebene des Randstreifens (14; 114) unter Wirkung des Drucks zurückgeführt zu werden, welcher auf das Element durch den Abschnitt des Bandes (10C) ausgeübt wird, der sich im hinteren Teil der Öse (12) während des Schließens der Klemme befindet.

7. Schelle nach Anspruch 3 und einem der Ansprüche 1 bis 5, **dadurch gekennzeichnet, daß** der Abschnitt des Bandes (10C), der sich im hinteren Teil der Öse (12) befindet, Mittel umfaßt, um die vorstehende Dicke des Rückhalteelementes aufzunehmen.

8. Schelle nach Anspruch 4 und einem der Ansprüche 1 bis 7, **dadurch gekennzeichnet, daß** der Randstreifen (14; 114) ein freies Ende aufweist, das in Form einer Gabel ausgebildet ist, die durch zwei Zähne (34A, 34B; 134A, 134B) gebildet wird, welche jeweils eine Rückhaltelasche (26A, 26B; 126A, 126B) auf ihren gegenüber liegenden inneren Rändern tragen.

9. Klemmschelle, umfassend Mittel (10, 20), die ein Metallband ausbilden, das auf sich selbst eingerollt ist, und die ein erstes und ein zweites Ende (20A, 10A) aufweisen, das jeweils mit einem Haken (22) und einer Öse (12) versehen ist, die zum Äußeren der Schelle hin vorstehend ausgebildet sind, wobei letztere geeignet ist, einen geschlossenen Zustand einzunehmen, in dem der Haken auf der Öse festgehakt ist, und einen nicht geschlossenen Zustand, in dem der Haken und die Öse beabstandet sind, wobei die Schelle ferner einen Randstreifen (14; 114) umfaßt, der mit dem ersten Ende (20A) der Schelle einstückig ist und der sich im nicht geschlossenen Zustand im wesentlichen entlang des Umfangs der Schelle erstreckt, zwischen dem Haken (22) und der Öse (12), **dadurch gekennzeichnet, daß** die Öse (12) einen freien Rand (12A) aufweist, der im nicht geschlossenen Zustand der Schelle zum Haken (22) hin gedreht ist und der eine Aussparung (12C) aufweist, **dadurch**, daß der Randstreifen (14; 114) eine Führungserhöhung (40) trägt, die auf seiner Außenfläche vorsteht und die mit der Aussparung (12C) in der Schließrichtung der Schelle ausgerichtet ist, und **dadurch**, daß die Schelle Mittel aufweist, um die Führungserhöhung (40) im geschlossenen Zustand der Schelle unterhalb der Einheit aufzunehmen, die durch die Öse (12) und den Haken (22) gebildet ist, der an letzterer festgehakt ist.

10. Schelle nach einem der Ansprüche 1 bis 8, **dadurch gekennzeichnet, daß** der freie Rand (12A) eine Aussparung (12C) aufweist, **dadurch**, daß der Randstreifen (14; 114) eine Führungserhöhung (40) trägt, die auf seiner Außenfläche vorsteht und die mit der Aussparung (12C) in der Schließrichtung der Schelle ausgerichtet ist und **dadurch**, daß die Schelle Mittel aufweist, um die Führungserhöhung (40) im geschlossenen Zustand der Schelle unter der Einheit aufzunehmen, welche durch die Öse (12) und den Haken (22) ausgebildet ist, der auf der Öse festgehakt ist.

11. Schelle nach Anspruch 10, **dadurch gekennzeichnet, daß** die Öse (12) die Form einer Welle aufweist, deren Konkavität zum Inneren der Schelle gerichtet ist, um den Hohlraum (28) auszubilden.

12. Schelle nach einem der Ansprüche 10 oder 11, **dadurch gekennzeichnet, daß** sie Verkeilungsflächen (13) aufweist, die geeignet sind, mit der Führungserhöhung (40) im geschlossenen Zustand der Schelle zusammenzuwirken, um sich den relativen Verschiebungen zwischen der Öse (12) und dem Randstreifen (14; 114) quer (T) zur Schließrichtung der Schelle zu widersetzen.

13. Schelle nach Anspruch 12, **dadurch gekennzeichnet, daß** die Verkeilungsflächen den Rand (13) der Aussparung (12C) der Öse (12) umfassen.

14. Schelle nach einem der Ansprüche 10 bis 13, **dadurch gekennzeichnet, daß** die Öse (12) auf ihrer Rückseite (30) zum Zurückhalten des Hakens (22) im geschlossenen Zustand der Schelle eine Verkeilungserhebung (60) aufweist, welche unter der Öse eine Aushöhlung bildet, in der die Führungserhöhung (40) mindestens teilweise im geschlossenen Zustand der Schelle eingreift (41).

15. Schelle nach einem der Ansprüche 10 bis 14, **dadurch gekennzeichnet, daß** die Führungserhöhung (40) geeignet ist, im Anschlag mit einem Bereich (44A) des Hakens (22) zusammenzuwirken, der dem freien Rand (48) des Hakens gegenüber liegt, um während des Schließens die Verschiebung des Hakens in Bezug auf den Randstreifen zu begrenzen.

16. Schellen ach einem der Ansprüche 10 bis 15, **dadurch gekennzeichnet, daß** die Führungserhöhung durch eine Erhebung (40) ausgebildet ist.

17. Schelle nach einem der Ansprüche 10 bis 16, **dadurch gekennzeichnet, daß** sie eine Etikette (70) aufweist, die auf der Schelle unter wenigstens einer Haltelasche (72) eingeklemmt ist, die durch Ausschneiden und Biegen in den Mitteln gebildet wird, die ein Band (10, 20) bilden.

18. Schelle nach Anspruch 17, **dadurch gekennzeichnet, daß** die Mittel, die ein Band bilden, einen inneren Bandabschnitt (10) und einen äußeren Bandabschnitt (20) umfassen, der auf dem inneren Bandabschnitt befestigt (24) ist, und **dadurch**, daß die Etikette (70) auf einem ersten Rand (70A) zwischen dem inneren und dem äußeren Abschnitt eingeklemmt ist und auf einem zweiten Rand (70B) unter mindestens einer Haltelasche (72).

19. Klemmschelle nach einem der Ansprüche 10 bis 18, **dadurch gekennzeichnet, daß** der Randstreifen (114) in seinem zentralen Bereich einen Durchzug (135) aufweist.

## Claims

1. A clamping collar comprising means (10, 20) forming a metal strip rolled up on itself and having first and second ends (20A, 10A) respectively equipped with a hook (22) and with a lug (12) which project outwards from the collar, said collar being suitable for taking up a clamped state in which the hook is clipped onto the lug, and an undamped state in which the hook and the lug are spaced apart, the collar further comprising a tongue (14; 114) which is secured to the first end (20A) of the collar and which, in said unclamped state, extends substantially around the periphery of the collar, between the hook (22) and the lug (12), the collar further comprising pre-hooking means suitable, when the collar is in the unclamped state, for retaining said tongue relative to the second end of said collar in order to close said collar;
said clamping collar being **characterised in that** the lug has a free edge (12A) which, when the collar is in the undamped state, faces towards the hook (22), and **in that** the tongue carries at least one retaining member (26A, 26B; 126A, 126B) which, when the collar is in the unclamped state, lies in a cavity (28) provided under the lug and cooperates with the free edge (12A) thereof.

2. A damping collar according to claim 1, **characterised in that** the lug (12) is in the form of an undulation whose concave face faces towards the inside of the collar to form said cavity (28).

3. A collar according to claim 1 or 2, **characterised in that** the retaining member (26A, 268; 126A, 126B) projects relative to the tongue (14; 114) towards the outside of the collar.

4. A collar according to any one of claims 1 to 3, **characterised in that** the tongue (14; 114) carries at least one retaining member formed by a tab (26A, 26B; 126A, 126B) cut out from said strip and upstanding relative to said strip so as to have a free end (27A, 27B) facing towards said hook (22).

5. A collar according to claim 4, **characterised in that** the free edge (12A) of the lug (12) has a folded-back lip (32A, 32B) suitable for engaging at least in part under said tab (26A, 26B; 126A, 126B).

6. A collar according to daim 3 and to any one of claims 1 to 5, **characterised in that** the retaining member (26A, 26B; 126A, 126B) is suitable for being returned substantially into the plane of the tongue (14; 114) under the effect of the pressure exerted on said member by the strip portion (10C) that is situated behind the lug (12) while the collar is being clamped.

7. A collar according to claim 3 and to any one of claims 1 to 5, **characterised in that** the strip portion (10C) situated behind the lug (12) is provided with means for accommodating the projecting thickness of the retaining member.

8. A collar according to claim 4, and to any one of claims 1 to 7, **characterised in that** the tongue (14; 114) has a fork-shaped free end formed by two prongs (34A, 34B; 134A, 134B) which carry respective retaining tabs (26A, 26B; 126A, 126B) on their facing inside edges.

9. A damping collar comprising means (10, 20) forming a metal strip rolled up on itself and having first and second ends (20A, 10A) respectively equipped with a hook (22) and with a lug (12) which project outwards from the collar, said collar being suitable for taking up a clamped state in which the hook is dipped onto the lug, and an undamped state in which the hook and the lug are spaced apart, the collar further comprising a tongue (14; 114) which is secured to the first end (20A) of the collar and which, in said unclamped state, extends substantially around the periphery of the collar, between the hook (22) and the lug (12);
said clamping collar being **characterised in that** the lug (12) has a free edge (12A) which faces towards the hook (22) when the collar is in the undamped state, and which is provided with a notch (12C), **in that** the tongue (14; 114) carries a guide piece in relief (40) which projects from its outside face and which is in alignment with said notch (12C) in the direction in which the collar is damped, and **in that** the collar has means for accommodating said guide piece in relief (40) when the collar is in the clamped state, under the assembly formed by the lug (12) and by the hook (22) clipped onto said lug.

10. A collar according to any one of claims 1 to 8, **characterised in that** the free edge (12A) has a notch (12C), **in that** the tongue (14; 114) carries a guide piece in relief (40) which projects from its outside face and which is in alignment with said notch (12C) in the direction in which the collar is clamped, and **in that** the collar has means for accommodating said guide piece in relief (40) when the collar is in the clamped state, under the assembly formed by the lug (12) and by the hook (22) clipped onto said lug.

11. A collar according to claim 10, **characterised in that** the lug (12) is in the form of an undulation whose concave face faces towards the inside of the collar to form said cavity (28).

12. A collar according to any one of claims 10 or 11, **characterised in that** it has wedging surfaces (13) suitable for co-operating with the guide piece in relief (40) when the collar is in the clamped state so as to prevent the lug (12) from moving relative to the tongue (14; 114) transversely (T) to the direction in which the collar is damped.

13. A collar according to claim 12, **characterised in that** said wedging surfaces comprise the edge (13) of the notch (12C) of the lug (12).

14. A collar according to any one of claims of 10 to 13, **characterised in that**, on its back face (30) for retaining the hook (22) when the collar is in the damped state, the lug (12) has a wedging bulge (60) which forms a setback under said lug, in which setback the guide piece in relief (40) is engaged at least in part (41) when the collar is in the clamped state.

15. A collar according to any one of claims 10 to 14, **characterised in that** the guide piece in relief (40) is suitable for co-operating in abutment with a region (44A) of the hook (22) that is opposite the free edge (48) of said hook so as to limit the movement of the hook relative to the tongue during clamping.

16. A collar according to any one of claims 10 to 15, **characterised in that** the guide piece in relief is formed by an embossed region (40).

17. A collar according to any one of claims 10 to 16, **characterised in that** it has a label (70) held on the collar by being wedged under at least one holding tab (72) formed by cutting out and folding the means forming the strip (10, 20).

18. A collar according to claim 17, **characterised in that** the means forming the strip comprise an inner strip portion (10) and an outer strip portion (20) fixed (24) to said inner strip portion, and **in that** the label (70) is wedged along a first edge (70A) between said inner and said outer portions and, along a second edge (70B), under at least one holding tab (72).

19. A clamping collar according to any one of claims 10 to 18, **characterised in that** the tongue (114) is provided with a dimple (135) in a central region.
